Europäisches Patentamt

European Patent Office

Office européen des brevets

(11) Numéro de publication: **0 240 043**
**A1**

## (12) DEMANDE DE BREVET EUROPEEN

(21) Numéro de dépôt: **87200320.7**

(51) Int. Cl.⁴: **H04N 5/74**

(22) Date de dépôt: **25.02.87**

(30) Priorité: **04.03.86 FR 8602993**

(43) Date de publication de la demande:
**07.10.87 Bulletin 87/41**

(84) Etats contractants désignés:
**DE FR GB IT**

(71) Demandeur: **Laboratoires d'Electronique et de Physique Appliquée L.E.P.**
**3, Avenue Descartes**
**F-94450 Limeil-Brévannes(FR)**
**FR**
Demandeur: **N.V. Philips' Gloeilampenfabrieken**
**Groenewoudseweg 1**
**NL-5621 BA Eindhoven(NL)**
**DE GB IT**

(72) Inventeur: **Polaert, Rémy**
**Société Civile SPID 209, rue de l'Université**
**75007 Paris(FR)**
Inventeur: **Schorter, Bruno**
**Société Civile SPID 209, rue de l'Université**
**75007 Paris(FR)**

(74) Mandataire: **Landousy, Christian et al**
**Société Civile S.P.I.D. 209, Rue de l'Université**
**F-75007 Paris(FR)**

(54) **Relais optique opérant en mode d'accumulation de charges.**

(57) L'invention concerne un relais optique comportant une cible (12) d'un matériau électriquement isolant et laissant passer la lumière d'une manière dépendant du champ électrique parallèle à la direction de propagation de cette lumière, des moyens pour faire balayer une première face de cette cible par un faisceau électronique issu d'un canon à électrons (20), une grille-anode (30), une lame (38) optiquement transparente et électriquement conductrice, un amplificateur appliquant sur le relais le signal vidéo d'information visuelle. Elle est remarquable en ce que le relais optique comprend des moyens (23) permettant d'effectuer l'écriture et l'effacement de la cible en mode d'accumulation de charges qui coopèrent avec des moyens d'effacement précurseur (61) opérant sur un nombre réduit q de lignes de balayage situées au-delà de la ligne n concernée par l'écriture. Pour transmettre des images selon un standard de télévision, un dispositif de désentrelacement (35) est utilisé.

Application : Projection d'images ou de caractères alphanumériques

FIG.3

EP 0 240 043 A1

## RELAIS OPTIQUE OPERANT EN MODE D'ACCUMULATION DE CHARGES

L'invention concerne un relais optique comportant une cible d'un matériau électriquement isolant et laissant passer la lumière d'une manière dépendant du champ électrique parallèle à la direction de propagation de cette lumière, des moyens pour faire balayer une première face de cette cible par un faisceau électronique issu d'un canon à électrons, une grille-anode apte à recueillir les électrons secondaires émis sous l'action de ce faisceau, une lame optiquement transparente et électriquement conductrice disposée contre la deuxième face de la cible, des moyens pour appliquer sur le relais le signal vidéo d'information visuelle formé d'une succession de lignes de balayage, la cible étant constituée en un matériau devenant ferroélectrique au-dessous d'une certaine température, dite température de Curie, au voisinage de laquelle fonctionne le relais optique.

Un relais optique de ce type, pour projecteur de télévision, a été décrit dans les brevets FR 1 473 212 et FR 1 479 284. Afin de mieux caractériser l'invention un rappel du principe de fonctionnement de ce relais optique est donné ci-après. De plus amples renseignements peuvent être obtenus dans les documents cités.

Le cadre de l'invention concerne la transformation d'un signal électrique à variation temporelle, représentant une information visuelle, en une image visible. On sait que c'est là l'un des rôles d'un poste récepteur de télévision.

Dans le tube "image" d'un tel récepteur, c'est le faisceau d'électrons qui remplit classiquement les trois fonctions fondamentales de cette transformation :

f1 - il fournit l'énergie qui doit apparaître sous forme lumi neuse : la puissance lumineuse du tube est donc toujours inférieure à la puissance transportée par le faisceau;

f2 - il réalise le balayage spatial de la surface de l'image;

f3 - il applique l'information visuelle.

En raison des fonctions f2 et f3 entre autres, la puissance du faisceau, et donc la brillance de l'image ne peuvent être augmentées autant qu'il le faudrait pour la projection sur un grand écran, par exemple.

C'est pourquoi il a été proposé de dissocier la fonction f1 confiée, par exemple, à une lampe à arc, des fonctions f2 et f3 confiées à ce que l'on appelle un "relais optique". Il utilise un cristal présentant un effet électro-optique appelé "Effet Pockels". Un cristal de phosphate diacide de potassium $KH_2PO_4$ appelé par la suite KDP, convient à cet usage.

Cet effet peut être partiellement et sommairement décrit comme suit : lorsque le cristal qui est un isolant électrique, est soumis à un champ électrique parallèle à son axe cristallographique c (les trois axes cristallographiques a, b et c formant un trièdre trirectangle, l'axe c étant, le cas échéant, l'axe optique), l'indice n de ce cristal, pour des rayons lumineux se propageant dans la direction c et polarisés linéairement dans le plan ab, dépend de la direction de cette polarisation. Plus précisément, si l'on désigne par X et Y les bissectrices des axes a et b, et si l'on repère les paramètres du cristal relatifs à ces diverses directions par les lettres qui désignent ces dernières, on peut décrire que le diagramme des indices dans le plan ab devient une ellipse d'axes X et Y au lieu d'un cercle, et que la différence $n_x$-$n_y$ est proportionnelle au champ électrique appliqué. Il s'ensuit que si les rayons lumineux incidents sont polarisés parallèlement à l'axe a, par exemple, l'intensité lumineuse I traversant un polariseur de sortie sera $I = I_0 \sin^2 kV$ si la direction de polarisation de ce polariseur est parallèle à l'axe b, et $I = I_0 \cos^2 kV$ si cette direction est parallèle à l'axe a, $I_0$ étant égale à l'intensité lumineuse incidente s'il n'y a pas d'absorption parasite, V étant la différence de potentiel électrique entre les deux faces du cristal, et k un coefficient dépendant du matériau cristallin utilisé.

Pour obtenir une image, par projection à partir d'une lampe à travers cet ensemble, il suffit, selon ce qui a été dit précédemment, de faire régner un champ électrique parallèle à l'axe c, et de faire correspondre, en chaque point de la cible, la valeur de ce champ à la brillance du point correspondant de l'image à obtenir. Dans ce but, un faisceau électronique, issu d'un canon à électrons, et traversant des organes de déviation classiques, balaye la cible remplissant ainsi la fonction f2. Quant à la fonction f3, c'est-à-dire ici la commande du champ électrique, elle est également remplie par le faisceau de la manière suivante.

Lorsque les électrons de faisceau atteignent la surface de la cible, ils provoquent, si leur énergie est comprise dans les limites convenables et dans la mesure où le potentiel d'anode est suffisamment élevé, l'émission d'électrons secondaires en nombre plus grand que celui des électrons incidents. Il en résulte une élévation du potentiel électrique du point atteint, de sorte que la différence de potentiel entre l'anode et ce point diminue. Si les électrons du faisceau atteignent ce point en nombre suffisant, cette différence de potentiel devient négative et atteint une valeur telle (-3V par exemple), que chaque électron incident ne provoque plus l'émission que d'un seul électron secondaire. Le potentiel de ce point est ainsi fixé à une valeur limite par rapport à celui de l'anode. Il suffit pour cela que, compte tenu de la vitesse de balayage, l'intensité du faisceau soit suffisante. Le potentiel de l'anode étant constant, chaque passage du faisceau d'électrons fixe, comme il vient d'être dit, le potentiel d'un point quelconque A de la surface atteinte à une valeur $V_0$ indépendante de ce point et de l'instant de passage. Mais la charge électrique correspondante apparue en ce point dépend du potentiel de l'électrode de commande située à proximité, de l'autre côté de la cible.

Si l'on appelle VA le potentiel de cette électrode à l'instant de ce passage, cette charge est proportionnelle à VO-VA, VA représentant la valeur du signal d'information visuelle à l'instant de son passage.

La cible, dont la biréfringence dépend du champ électrique, est constituée par un monocristal de KDP, dont environ 95% de l'hydrogène a la forme d'hydrogène lourd (deutérium).

Or, l'effet Pockels est proportionnel, pour une épaisseur de cristal donnée, aux charges qui apparaissent sur les faces du cristal et donc, pour une tension de commande donnée, à la constante diélectrique de celui-ci. C'est pourquoi, on utilise une cible constituée en un cristal devenant ferroélectrique au-dessous d'une certaine température appelée température de Curie, et on opère avantageusement au voisinage de cette température, car la constante diélectrique atteint alors des valeurs très élevées et le relais optique peut fonctionner à l'aide de tensions de commande faciles à employer (l'effet Pockels étant proportionnel au produit $\epsilon$ V).

Les cristaux les plus courants qui présentent ce phénomène sont des sels acides, notamment du type KDP qui appartient à la classe des cristaux quadratiques et présente un axe optique parallèle à l'axe cristallographique c. Sa température de Curie est située vers -53°C. Au-dessus de la température de Curie, le DKDP est un cristal quadratique classe de symétrie $\overline{4}2$ m et il a un comportement paraélectrique. En dessous de la température de Curie, le DKDP devient orthorhombique, classe de symétrie mm2, et il manifeste un comportement ferroélectrique : localement il y a polarisation spontanée et apparition de domaines ferroélectriques.

A la température ambiante, le cristal est anisotrope, mais au voisinage du point de Curie l'anisotropie devient extrêmement importante. Le changement d'état s'accompa gne de variations abruptes des propriétés physiques selon les axes du cristal :

-coefficients piézo-électriques

-coefficients électro-optiques

-constantes diélectriques $\epsilon_x$ et $\epsilon_z$.

Ainsi la constante diélectrique $\epsilon_z$ passe d'une valeur d'environ 60 à la température ambiante à une valeur de 30.000 à la température de Curie.

On sait que, du point de vue électrique, l'épaisseur apparente e du cristal de DKDP est

$e = E.(\epsilon_x/\epsilon'_z)^{0,5}$.

La cible apparait d'autant plus mince que le rapport $\epsilon_x/\epsilon'_z$ est plus petit, où $\epsilon'_z$ est la valeur de $\epsilon_z$ lorsque le cristal est bloqué mécaniquement. Dans un relais optique en effet, la lame monocristalline de DKDP, d'une épaisseur E voisine de 250 microns, est collée fermement sur un support rigide : une lame de fluorine de 5 mm d'épaisseur.

La cible du relais optique est donc habituellement refroidie vers -51°C, c'est-à-dire à une température légèrement supérieure au point de Curie. Dans ces conditions $\epsilon_x/\epsilon'_z = 1/9$ et l'épaisseur apparente du cristal est environ 80 microns, ce qui confère au relais optique une bonne résolution d'image. En dessous du point de Curie ce rapport $\epsilon_x/\epsilon'_z$ est encore bien plus faible, ce qui améliore beaucoup la résolution d'image.

Un tel relais optique est utilisé dans le mode "stabilisation de potentiel" pour la reproduction des images surtout de télévision puisqu'il effectue simultanément l'inscription et l'effacement de l'image. Le faisceau d'électrons agit à la manière d'un court-circuit volant pour ajuster à tout moment le potentiel en chaque point de la surface de cible à la valeur correspondant à la brillance locale du point de l'image à projeter. Cela est effectué spontanément, soit en déposant des électrons, soit en retirant des électrons par émission secondaire jusqu'à ce que le potentiel de la cible au point considéré se stabilise à la valeur imposée par le signal vidéo.

Dans ce mode, le courant de faisceau est constant et le signal vidéo module la tension entre la cible et la grille-anode.

Pour augmenter la résolution, on réduit le plus possible les aberrations en modifiant les diaphragmes et la bobine de focalisation, et en introduisant des bobines correctrices dipolaires et quadrupolaires. On peut également réduire le courant de faisceau nécessaire à l'inscription en augmentant l'épaisseur de la cible.

Mais il n'est pas possible de réduire des distances grille-cible, de l'ordre de 20 µm, pour augmenter la résolution compte tenu des contingences technologiques. De plus cette résolution spatiale ne peut être augmentée qu'au détriment de la transparence de la grille, ce qui provoque un effet de traînage très important (0,3 à 0,5 seconde) visible à l'inscription d'un blanc en vidéo négative par exemple.

Dans le mode à stabilisation du potentiel, il y a donc un lien systématique entre la résolution et le traînage et une amélioration de l'un se fait au détriment de l'autre.

De plus le mode de fonctionnement par stabilisation de potentiel est générateur de défauts qui sont très préjudiciables. En particulier la lisibilité des caractères reproduits, qu'ils soient noirs sur fond blanc ou l'inverse, est détériorée. De même lorsque le caractère reproduit est par exemple un rectangle blanc, il se produit une détérioration du contour et des aigrettes aux quatre coins du rectangle.

Le but de l'invention est donc de supprimer ces effets néfastes en augmentant la limite de résolution et en supprimant le traînage et les aigrettes.

Pour cela l'invention telle que définie dans le préambule est remarquable en ce que le relais comprend des moyens permettant d'effectuer l'écriture et l'effacement de la cible en mode d'accumulation de charges comprenant l'amplificateur vidéo qui délivre la modulation vidéo au wehnelt en mode d'écriture, des générateurs de polarisation de la grilleanode et de la lame transparente et un déviateur de faisceau d'électrons, lesdits moyens coopérant avec des moyens d'effacement précurseur opérant sur un nombre réduit $q$ de lignes de balayage situées au-delà de la ligne $n$ concernée par l'écriture.

Elle est également remarquable en ce que les moyens d'effacement précurseur comprennent un compteur de lignes qui détermine la $(n+p)$ième ligne de balayage, ce compteur activant le déviateur de faisceau qui agit sur le faisceau électronique pour qu'il effectue sur la cible un effacement de $q$ lignes sensiblement centrées sur la $(n+p)$ième ligne, sans affecter la ligne $n$, avec p supérieur à q/2.

Elle est également remarquable en ce que le déviateur de faisceau agit de sorte que celui-ci décrit sur la cible une figure rectangulaire formée d'un trajet aller durant lequel s'effectue l'écriture sur la ligne n, le canon à électrons délivrant un faisceau focalisé avec un courant d'écriture $I_e$, et d'un trajet retour durant lequel s'effectue l'effacement, le canon à électrons délivrant un faisceau large avec un courant d'effacement supérieur à le.

Dans le mode d'inscription par "accumulation de charges" (ACC), la cible est polarisée négativement, par exemple à -250 V par rapport à la grille, et c'est l'intensité du faisceau d'électrons qui est modulée pour déposer, par émission secondaire, plus ou moins de charges positives sur la cible en fonction du signal vidéo, la modulation étant faite par le wehnelt.

A la différence d'un écran de phosphore qui s'éteint de lui-même en quelques millisecondes, la cible de DKDP est un isolant parfait et sa rémanence est quasi infinie. Il est nécessaire d'effacer la cible pour pouvoir inscrire une nouvelle image et, pour cela, il faut polariser la cible à 0 volt et y déposer un nombre de charges au moins supérieur à celui qui a servi à l'inscription. Soit $I_i$ et $T_i$ le courant de faisceau et le temps consacrés à l'inscription d'un blanc sur une surface donnée. Il en résulte $(\delta-1)I_iT_i$ charges déposées, $\delta$ étant le coefficient d'émission secondaire. Pour l'effacement, il faudra un temps $T_e$ et un courant de faisceau $I_e$ tels que $I_eT_e \geq (\delta-1)I_iT_i$.

Par exemple, si on choisit d'effacer pendant le retour de ligne, il est nécessaire d'avoir un courant important. Pour le standard 625 lignes, en supposant un coefficient d'émission secondaire $\delta=3$, le courant à l'effacement $I_e$ doit être 8,5 fois supérieur au courant d'inscription $I_i$.

## -Mode inscription

Soit $I_i$ le courant du faisceau incident. L'inscription de la cible est faite par un courant d'électrons I qui quittent la cible par émission secondaire : $I = I_i(\delta-1)$. Pour afficher un niveau de blanc correspondant à $V_o$ - (tension quart d'onde), le courant de faisceau incident $I_i$ nécessaire est donc de la forme :

$$I_i = \frac{C\, V_o}{b(\delta-1)\, T_i\, \tau} \qquad (1)$$

avec :
C = capacité du cristal de DKDP
$V_o$ = tension quart d'onde pour le niveau du blanc = 150 V
b = facteur de blanking (le blanking désigne la suppression du signal vidéo et le signal d'effacement pendant les retours de balayages lignes et trames)

$\delta$ = émission secondaire de cible

$T_i$ = période image

$\tau$ = transparence des grilles $G_1$ et $G_2$.

La capacité de la lame est : $C = \epsilon_0 . \epsilon'_z\ S/L$

(S = surface de la cible et L = épaisseur de la cible).

L'expression précédente s'écrit :

$$I_i = \frac{\epsilon_0\ \epsilon'_z\ S\ V_0}{L\ b\ (\delta-1)\ T_i\ \tau} \qquad (2)$$

En négligeant la capacité grille-cible devant la capacité du cristal, on peut écrire : $\sigma_0 = \epsilon_0\ \epsilon'_z\ V_0/L$

$\sigma_0$ étant la densité de charges pour le déphasage quart d'onde à travers une lame de DKDP d'épaisseur L (c'est-à-dire demi-onde si la lame est utilisée en double trajet).

A titre d'exemple avec les paramètres intrinsèques suivants :

L = 240 $\mu$m

$V_o$ = 150 volts

$\epsilon'_z$ = 660

$\epsilon_0$ = 1/36 $\pi$ 10$^9$

on a : $\sigma_0$ = 3,3.10$^{-3}$ C.m$^{-2}$

$$soit : I_i = \frac{\sigma_0\ S}{b\ (\delta-1)\ T_i\ \tau} \qquad (3)$$

Dans le cas des paramètres fonctionnels suivants données à titre d'exemple :

une cible 28 x 38 mm S = 1,063.10$^{-3}$ m$^2$

épaisseur de la cible L = 240 $\mu$m

période image $T_i$ = 40.10$^{-3}$ s

facteur de blanking b = 0,81

émission secondaire $\sigma$ = 3

transparence de grille $\tau$ = 0,92

On obtient un courant de faisceau $I_i$ = 59 $\mu$A pour inscrire une image au niveau de blanc maximum correspondant à 150 volts sur une cible de 240 $\mu$m d'épaisseur.

D'après la relation 2, il y a tout intérêt, pour réduire le courant, à utiliser une cible épaisse recouverte d'une couche finale à forte émission secondaire. La réduction du courant diminue les effets de charge d'espace et améliore la résolution.

-mode effacement

Le courant à l'effacement n'est autre que le courant de faisceau lui-même ; il y a toujours émission secondaire mais ces électrons secondaires retombent tous sur la cible autour du point d'impact en un faisceau large. Donc :

$$I_e = \frac{C\ V_0}{T_e\ \tau} \qquad (22)$$

avec $T_e$ = durée d'effacement d'une image.

En supposant que l'effacement est effectué pen dant chaque retour de balayage de ligne $T_e$ = n $T_r$ :

$I_e$ = C $V_0$/n $T_r$ $\tau$ (22')

(n = nombre de lignes de balayage par image, $T_r$ = durée du retour ligne), cette durée d'effacement $T_e$ est au maximum égale à la durée du blanking, soit :

$T_e \leq$ (1-b) $T_i$ (23)

Dans ce cas :

5

$$I_e > \frac{C V_o}{(1-b) T_i \tau} \qquad (24)$$

$$\text{soit } I_e > I_i (\delta-1) \frac{b}{(1-b)} \qquad (25)$$

avec $\sigma = 3$ et $b = 0,81$, $I_e/I_i \geq 8,5$.

Dans l'exemple choisi avec une cible de 240 $\mu$m d'épaisseur, on obtient $I_e = 500$ $\mu$A.

La disproportion entre les courants nécessaires à l'effacement et à l'inscription peut être sensiblement réduite en modifiant le taux de blanking b. En effet, si on utilise un circuit électronique de désentrelacement des lignes, tel que celui décrit ci-après, il est possible de modifier le débit des signaux pour réduire la durée de l'inscription et allonger d'autant la durée de l'effacement.

Les tableaux ci-après donnent les durées, les courants à l'inscription et à l'effacement ainsi que la bande passante du signal vidéo pour différentes valeurs du blanking b dans les standards 625 et 1023 lignes TV.

| b : coefficient de blanking | 0,81 | 0,65 | 0,50 | 0,33 |
|---|---|---|---|---|
| Durée du balayage (µs)<br>  . aller<br>  . retour<br>(total = 64) | 52<br>12 | 42<br>22 | 32<br>32 | 21,3<br>42,7 |
| Courant (µA) :<br>  . inscription<br>  . effacement | 59<br>500 | 73<br>271 | 96<br>192 | 145<br>145 |
| Bande passante vidéo (MHz)<br>pour 1043 points par ligne TV | 10 | 12,4 | 16,3 | 24,4 |

Tableau I : Standard 625 lignes, 50Hz

| b : coefficient de blanking | 0,785 | 0,65 | 0,50 | 0,33 |
|---|---|---|---|---|
| Durée du balayage (µs)<br>  . aller<br>  . retour<br>(total = 32,6) | 25,6<br>7 | 21,2<br>11,4 | 16,3<br>16,3 | 10,8<br>21,8 |
| Courant (µA) :<br>  . inscription<br>  . effacement | 73<br>534 | 88<br>327 | 115<br>230 | 174<br>174 |
| Bande passante vidéo (MHz)<br>pour 1043 points par ligne TV | 20,3 | 24,5 | 31,9 | 48,3 |

Tableau II : Standard 1023 lignes 60 Hz

Le tranage est nul en accumulation de charges. En effet, avant chaque inscription, il y a effacement total de l'image précédente et, par conséquent, il n'y a pas d'empilement des résidus des images précédentes.

Le mode ACC présente plusieurs avantages : en effet, la distance grille-cible ne joue aucun rôle sur la résolution d'image, par conséquent la grille peut être montée à 0,5 mm, voire à plusieurs millimètres, de distance de la cible. La force électrostatique entre la cible et la grille est réduite d'un facteur $10^2$ à $10^3$ et l'ombre de la grille est considérablement atténuée.

On élimine ainsi des difficultés :

-de fabrication et de montage mécanique de la grille,

-de tenue en tension de cette grille,

-de résistance de couche conductrice transparente,

-de moiré entre fréquence spatiale de la mire et fréquence spatiale des fils de grille.

Il n'apparaît plus de relation entre la limite de résolution et le nombre de fils de grille. Il y a suppression de la surmodulation des contours et des aigrettes, ce qui améliore la lisibilité des caractères et rend l'image plus confortable.

En accumulation de charges l'amplificateur vidéo module le wehnelt (environ 60 volts sur 8 pF) au lieu de la cible (150 V sur 400 pF) en stabilisation de potentiel.

Pour effacer la cible on utilise un effacement précurseur appelé ainsi parce qu'il précède l'écriture et porte sur quelques lignes situées au-delà de la ligne en cours d'écriture.

Il est souhaitable que l'effacement soit plus large que l'inscription à condition de ne pas affecter la ligne que l'on vient d'écrire, c'est-à-dire à condition d'effectuer l'effacement en avance de quelques lignes sur celle à écrire.

Soit n le numéro de la ligne à écrire. On fera l'effacement préférentiellement pendant chaque retour de balayage avec un courant I x 10 qui va s'étaler par exemple sur q = 10 lignes et concerner les lignes de rang n+2 à n+12. Le spot décrit indéfiniment des boucles rectangulaires de la hauteur de 7 lignes, qui balayent l'écran de haut en bas à la vitesse de balayage trame.

La luminosité reste à peu près inchangée car la bande noire qui précède l'inscription occupe, dans cet exemple, une hauteur maximale de 12 lignes si l'image est très sombre et de 2 lignes s'il s'agit d'une image très lumineuse soit, dans tous les cas, une perte de niveau lumineux inférieure à 12/625 ≈ 2 %. Le papillotement est imperceptible.

Mais pour ne pas effacer simultanément les lignes paires et impaires, ce qui produirait une diminution de la luminosité par rapport au mode à stabilisation de potentiel, il y a lieu de supprimer l'entrelacement des lignes de balayage. S'il s'agit d'un système de télévision en circuit fermé, la caméra de prise de vue peut être modifée spéciale ment pour délivrer un signal vidéo non entrelacé. Ceci est également vrai pour un générateur d'images synthétisées par ordinateur. Les standards de TV existants fonctionnant avec entrelacement, il faut transformer les standards et faire que toutes les lignes par exemple 625 lignes, soient jointives et défilent au cours d'une seule trame de 40 ms.

Par conséquent, ce mode de fonctionnement avec effacement précurseur nécessite un convertisseur de standard entrelacé en standard non entrelacé.

Pour effectuer cette conversion de standard, préférentiellement on utilise une mémoire d'image de grande capacité mémoire.

Le circuit de désentrelacement a pour rôle de reclasser chacune des 312,5 lignes de rang impair (trame impaire) et des 312,5 lignes de rang pair (trame paire) de façon à reconstituer une image entière où les 625 lignes défilent régulièrement les unes après les autres en une seule séquence de 40 ms. Il est donc nécessaire d'avoir emmagasiné la totalité des deux trames avant d'effectuer le reclassement et, s'il s'agit de mémoires à accès séquentiel, il faudra deux blocs de mémoire d'image qui seront alternativement en chargement et en lecture.

Par exemple, si l'on veut mémoriser une image de 1200 P/L x 100 lignes numérisées sur 8 bits, cela conduit à $9,6.10^{+6}$ bits. Pour effectuer le désentrelacement avec une mémoire à accès séquentiel, il faut une capacité mémoire de $1,92.10^{+7}$ bits. Les mémoires à circuits intégrés à dispositifs à transfert de charges de 300 kbits par boîtier, permettent de réaliser cette opération.

L'invention sera mieux comprise à l'aide des figures suivantes, données à titre d'exemples non limitatifs, qui représentent :

figure 1 : une coupe de la partie essentielle du relais optique selon l'art antérieur,

figure 2 : un schéma-bloc représentant les moyens pour faire fonctionner le relais optique en accumulation de charges et un compteur pour effectuer l'effacement précurseur,

figure 3 : un schéma-bloc analogue à celui de la figure 2 avec en plus une mémoire d'image pour effectuer le désentrelacement d'un standard de télévision,

figure 4 : une représentation du mode d'écriture et du mode d'effacement précurseur d'une trame selon l'invention,

figure 5 : un schéma-bloc d'un exemple de mémoire d'images opérant le désentrelacement.

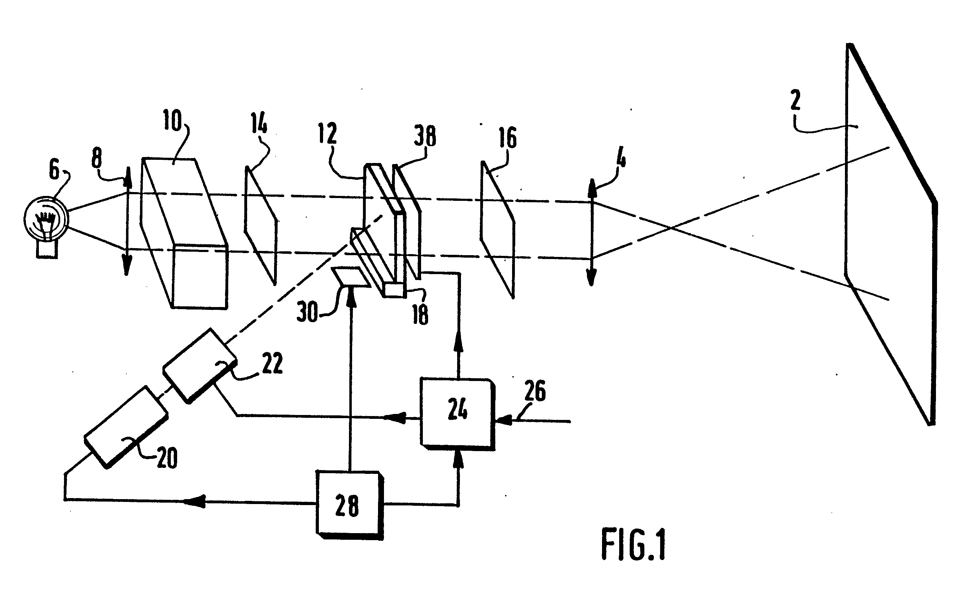

Sur la figure 1, sont schématiquement représentés, les organes essentiels d'un relais optique conforme à l'invention, et ceux qui coopèrent avec ce relais à l'obtention d'une image visible, projetée sur un écran 2 par une lentille de projection 4. La lumière est fournie par une lampe 6, représentée comme étant à incandescence, mais qui pourrait évidemment être de tout autre type. Cette lumière traverse une lentille de collimation 8, puis une cuve 10 dont le rôle est d'arrêter le rayonnement calorifique infrarouge. Le relais optique est essentiellement constitué par une cible 12, formée d'un monocristal parallélépipédique de KDP dont l'axe optique (c) est perpendiculaire aux grandes faces, et placée entre les deux polariseurs croisés 14 et 16 dont les plans de polarisation sont parallèles aux deux autres axes cristallographiques (a et b) du monocristal. Un échangeur thermique 18 est en contact avec la cible 12 et la maintient au voisinage de sa température de Curie. La face gauche de cette cible reçoit un faisceau d'électrons, représenté en pointillé et issu d'un canon à électrons 20. Ce faisceau balaye périodiquement toute la surface utile de la cible 12 sous l'action d'organes de déflexion 22 commandés par les signaux de balayage issus d'un récepteur 24 qui les élabore à partir des signaux de synchro nisation qui lui sont fournis à son entrée 26 avec le signal d'information visuelle proprement dit. Un bloc 28 fournit à certains des organes déjà cités les tensions électriques continues qui leur sont nécessaires, ainsi qu'à une anode 30. Ce n'est que pour la clarté du dessin que celle-ci est représentée sous la forme d'une plaque parallèle au faisceau lumineux, car il est évident que cette disposition, très favorable au passage de la lumière ne l'est guère à la collection des électrons secondaires émis par tous les points de la surface de la cible 12 atteints par le faisceau électronique. C'est pourquoi, dans la pratique, l'anode est disposée parallèlement à la surface de la cible 12 et tout près de celle-ci. Comme elle doit être traversée par le faisceau d'électrons incidents et par la lumière, on lui donne une forme appropriée, celle d'une grille par exemple. Une lame 38 électriquement conductrice et optiquement transparente, à l'aide d'une mince couche d'or par exemple, est disposée derrière la cible 12. C'est à cette lame que le récepteur 24 applique le signal d'information visuelle.

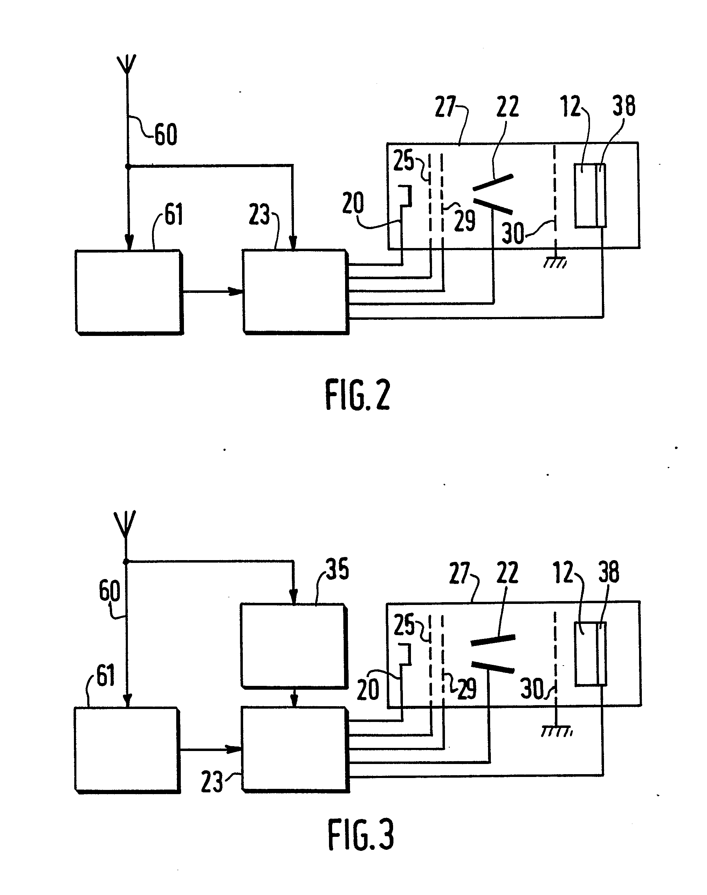

La figure 2 représente des éléments essentiels 27 du relais optique décrit sur la figure 1. Le canon à élec trons 20 est ici symbolisé par une cathode. Les moyens de fonctionnement 23 permettent de faire fonctionner le relais optique en mode d'accumulation de charges. Pour cela, en mode écriture, les moyens de fonctionnement 23 appliquent sur le wehnelt 25 le signal de modulation de polarité négative issu d'un générateur vidéo symbolisé par une antenne 60. La polarisation continue du wehnelt est par exemple de -600 volts et la modulation superposée est par exemple de -100 volts crête. Le dispositif de déflexion de faisceau 22 opère de sorte que le canon à électrons 20 écrit sur la n-ième ligne de la trame. Les moyens 23 appliquent simultanément une polarisation continue de -250 volts sur la lame 38 placée derrière la cible 12. En mode d'effacement le faisceau d'électrons est défléchi par le dispositif 22 pour atteindre la (n+p)-ième ligne, par exemple n+7. Simultanément le courant délivré par le canon 20 est augmenté par les moyens 23 en supprimant la modulation du wehnelt.

Dans les deux cas la grille-anode 30 est au potentiel de la masse. La détermination de la (n+p)ième ligne est effectuée par le compteur de lignes 61 qui commande en conséquences les moyens 23. En mode d'effacement la lame 38 est portée au potentiel de la masse. Lorsque les informations à représenter sur l'écran nécessitent une échelle de gris, ou de demi-teintes, par exemple lorsqu'ils ne sont pas constitués de caractères alphanumériques mais par des images représentant des personnages, il est alors souhaitable d'utiliser une grille auxiliaire de focalisation 29 qui reçoit une partie du signal vidéo appliqué au wehnelt 25.

Le schéma de la figure 2 s'applique au cas où le signal vidéo qui arrive du générateur vidéo ne correspond pas à un signal entrelacé comme cela peut être le cas avec des caméras adaptées ou des circuits internes de diffusion.

La figure 3 s'applique au cas général des standards de télévision qui sont généralement entrelacés. Pour appliquer l'effacement précurseur il est souhaitable, afin de ne pas perdre en luminosité d'image, d'effectuer un désentrelacement préalable. Ceci est effectué dans le dispositif de désentrelacement 35 qui reçoit le signal vidéo de l'antenne 60. Ce dispositif de désentrelacement délivre un signal vidéo désentrelacé qui est appliqué sur le wehnelt 25 à travers les moyens 23. Les autres éléments sont représentés avec les mêmes repères que sur la figure 2.

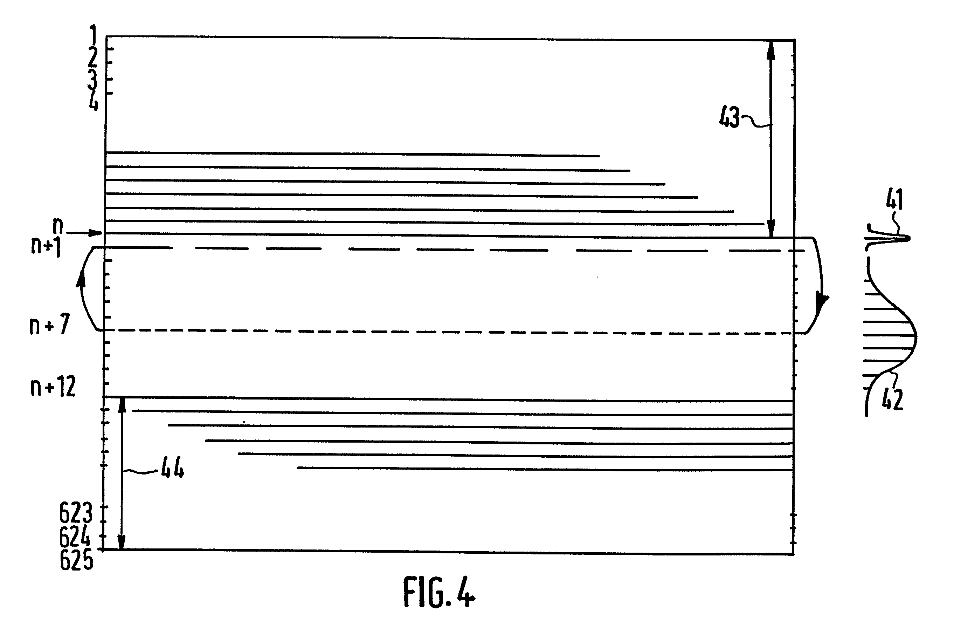

La figure 4 représente le mode d'écriture et le mode d'effacement précurseur d'une trame selon l'invention. Ceci est indiqué pour un exemple de trame à 625 lignes. Lorsque le faisceau d'électrons a fini d'écrire la n-ième ligne, les moyens de déflexion le font passer à la (n+p)ième ligne, par exemple n+7. Il décrit alors la (n+7)ième ligne en retour de lignes. Lorsque cette (n+7)ième ligne a été balayée, il est défléchi sur la (n+1)ième ligne et repasse en mode d'écriture. Selon ce dernier mode le profil du courant de faisceau est représenté sous le repère 41. C'est un courant de faisceau très focalisé sur la n-ième ligne, de valeur par exemple $I_e \doteq 59$ microampères. En mode d'effacement le faisceau est largement défocalisé de sorte qu'il arrose un nombre élevé de lignes, mais sans jamais atteindre la n-ième ligne qui vient d'être écrite. L'effacement s'effectue ainsi environ de la (n + 2)ième ligne à la (n + 12)ième ligne par exemple. Le profil du courant de faisceau est représenté sous le repère 42. La valeur de ce courant d'effacement est beaucoup plus élevée par exemple 500 microampères.

Le repère 43 indique les lignes de l'image nouvelle qui viennent d'être écrites et le repère 44 les lignes de l'image précédente qui n'ont pas encore été effacées.

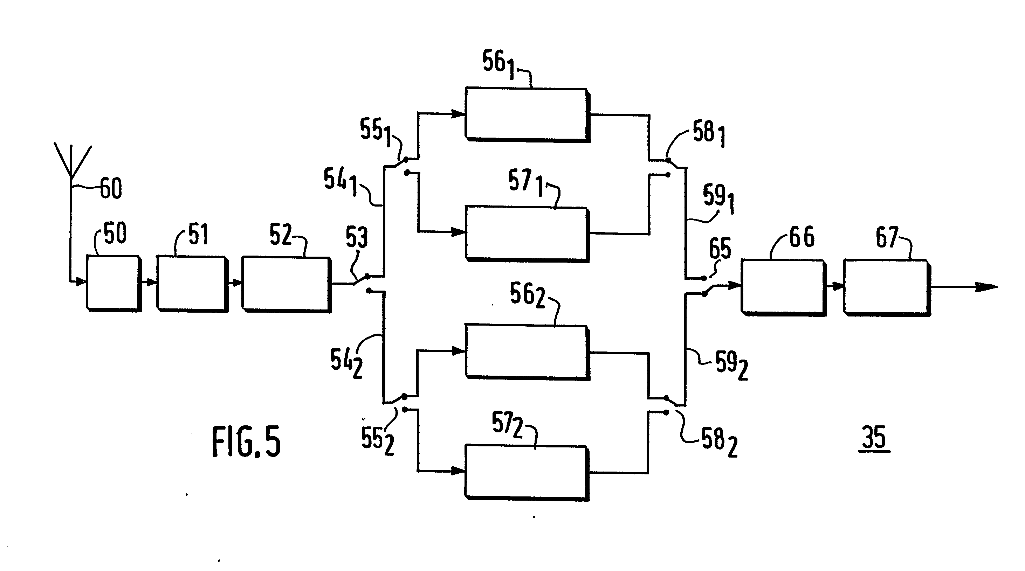

La figure 5 représente un dispositif de désentrelacement 35. Lorsque le signal est issu d'une antenne 60, il est détecté par un détecteur 50 puis filtré par un filtre 51. Cette opération disparaît si le signal est délivré sous la forme d'un signal vidéo issu d'un générateur vidéo. Le signal vidéo est numérisé par un convertisseur analogique-numérique 52. Le signal numérique est aiguillé par un commutateur 53 alternativement selon deux voies $54_1$ et $54_2$. L'alternance se fait au rythme de la durée d'une trame par exemple 40 ms. Le signal entrelacé des voies $54_1$ et $54_2$ est désentrelacé respectivement à l'aide des commutateurs $55_1$ et $55_2$ qui sélectionnent successivement les lignes paires et impaires de chaque trame. Cette sélection s'effectue au rythme de chaque demi-trame soit dans l'exemple 20 ms.

Ainsi toutes les lignes impaires 1, 3, 5, ... sont stockées dans les mémoires $56_1$ et $56_2$ pour respectivement les voies $54_1$ et $54_2$, et toutes les lignes paires 2, 4, 6, ... sont stockées dans les mémoires $57_1$ et $57_2$ pour respectivement les voies $54_1$ et $54_2$. Pour désentrelacer chaque voie les commutateurs $58_1$ et $58_2$ vont alternativement sélectionner les lignes paires et les lignes impaires au rythme de la durée d'une ligne, par exemple 64 microsecondes, pour obtenir sur les voies de sortie $59_1$ et $59_2$ les lignes désentrelacées apparaissant dans l'ordre 1, 2, 3, 4, 5, .... Les blocs mémoire $56_1$ et $57_1$ d'une part, et les blocs $56_2$ et $57_2$ d'autre part opèrent en alternance de sorte que les uns sont chargés lorsque les autres sont lus. Cette sélection est effectuée à l'aide du commutateur 65. Le signal numérique est reconverti en analogique à l'aide d'un convertisseur numérique-analogique 66 puis filtré par un filtre 67 pour être utilisé.

## Revendications

1. Relais optique comportant une cible d'un matériau électriquement isolant et laissant passer la lumière d'une·manière dépendant du champ électrique parallèle à la direction de propagation de cette lumière, des moyens pour faire balayer une première face de cette cible par un faisceau électronique issu d'un canon à électrons, une grille-anode apte à recueillir les électrons secondaires émis sous l'action de ce faisceau, une lame optiquement transparente et électriquement conductrice disposée contre le deuxième face de la cible, un amplificateur appliquant sur le relais le signal vidéo d'information visuelle formé d'une succession de lignes de balayage, la cible étant constituée en un matériau devenant ferroélectrique au-dessous d'une certaine température, dite température de Curie, au voisinage de laquelle fonctionne le relais optique afin de fournir une image finale, caractérisé en ce qu'il comprend des moyens permettant d'effectuer l'écriture et l'effacement de la cible en mode d'accumulation de charges comprenant l'amplificateur vidéo qui délivre la modulation vidéo au wehnelt en mode d'écriture, des générateurs de polarisation de la grille-anode et de la lame transparente et un déviateur de faisceau d'électrons, lesdits moyens coopérant avec des moyens d'effacement précurseur opérant sur un nombre réduit q de lignes de balayage situées au-delà de la ligne n concernée par l'écriture.

2. Relais optique selon la revendication 1, caractérisé en ce qu'il comprend une grille auxiliaire de focalisation placée après le wehnelt, dans le sens de propagation du faisceau, cette grille auxiliaire recevant une partie du signal vidéo appliqué sur le wehnelt, afin de pouvoir restituer une échelle de demi-teintes dans l'image finale.

3. Relais optique selon une des revendications 1 ou 2, caractérisé en ce que les moyens d'effacement précurseur comprennent un compteur de lignes qui détermine la (n + p)ième ligne de balayage, ce compteur activant le déviateur de fais ceau qui agit sur le faisceau électronique pour qu'il effectue sur la cible un effacement de q lignes sensiblement centrées sur la (n + p)ième ligne, sans affecter la ligne n, avec p supérieur à q/2.

4. Relais optique selon la revendication 3, caractérisé en ce que le déviateur de faisceau contrôle la déflexion du faisceau de sorte que celui-ci décrit sur la cible une figure rectangulaire formée d'un trajet aller durant lequel s'effectue l'écriture sur la ligne n, le canon à électrons délivrant un faisceau focalisé avec un courant d'écriture $I_i$, et d'un trajet retour durant lequel s'effectue l'effacement, le canon à électrons délivrant un faisceau large avec un courant d'effacement supérieur à $I_i$, de sorte que au moins le nombre total de charges déposées à l'inscription soit retiré à l'effacement.

5. Relais optique selon les revendications 3 ou 4, caractérisé en ce que, pour transmettre des images selon un standard de télévision à lignes entrelacées, il comprend un dispositif de conversion qui transforme le standard entrelacé en un standard désentrelacé.

6. Relais optique selon la revendication 5, caractérisé en ce que le dispositif de conversion comprend un convertisseur analogique-numérique qui opère sur le signal vidéo entrelacé, un commutateur de trame, orientant alternativement chaque trame du signal entrelacé sur deux voies, chacune de ces voies comprenant :

-un commutateur de demi-trame qui oriente alternativement chaque demi-trame vers deux mémoires stockant respectivement la trame impaire et la trame paire, puis un commutateur de lignes sélectionnant alternativement les lignes d'ordre pair et d'ordre impair afin de construire une trame désentrelacée, chaque trame désentrelacée des deux voies étant alternativement sélectionnée par un commutateur de trame qui permet d'effectuer la lecture d'une des voies tandis que l'autre est en cours de chargement et inversement, le signal sélectionné étant reconverti en signal analogique à l'aide d'un convertisseur numérique-analogique puis filtré à l'aide d'un filtre pour fournir un signal vidéo désentrelacé.

FIG.1

**FIG.2**

**FIG.3**

FIG.4

FIG.5

0 240 043

35

4-Ⅳ-PHF 86-518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | 1985 SID INTERNATIONAL SYMPOSIUM DIGEST OF TECHNICAL PAPERS, Society for SID Information Display, 1ère édition, mai 1985, pages 266-269, Palisades Institute for Research Services, Inc., New York, US; A. FARRAYRE et al.: "14.4: Geometrical resolution improvement of sodern visualization system" * Page 266, colonne de gauche, lignes 48-55 * | 1 | H 04 N   5/74 |
| | --- | | |
| A | US-A-3 637 931  (DONJON et al.) * Colonne 3, ligne 50 - colonne 4, ligne 12 * | 1 | |
| | ----- | | |

| DOMAINES TECHNIQUES RECHERCHES (Int. Cl.4) |
|---|
| H 04 N<br>G 09 G<br>G 02 F |

Le présent rapport de recherche a été établi pour toutes les revendications

| Lieu de la recherche | Date d'achèvement de la recherche | Examinateur |
|---|---|---|
| LA HAYE | 29-05-1987 | YVONNET J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82